# EUROPEAN PATENT APPLICATION

(11) **EP 4 303 512 A1**
(43) Date of publication of application: **10.01.2024**
(21) Application number: 22763674.3
(22) Date of filing: 25.04.2022
(51) Int. Cl.: F26B 17/10

(54) **METHOD FOR PROCESSING HEAT-SENSITIVE MATERIALS IN A VORTEX CHAMBER**

(30) Priority: 02.03.2021 RU 2021105433
(71) Applicant: SIA "EMPYRIO", 1012 Riga (LV)
(72) Inventor: STOROZHEV, Fyodor Nikolaevich, Novosibirskaya oblast, 633612 (RU); VILCHEK, Sergei Yurievich, Novosibirsk, 630054 (RU)
(74) Representative: Kromanis, Artis
(86) International application number: PCT/RU2022/000136
(87) International publication number: WO 2022/186726

(57) **Abstract**

The invention relates to the field of processing materials, and more particularly to a method for processing heat-sensitive materials in a vortex chamber, and can be used for drying, comminuting, heat treating and simultaneously separating into fractions such heat-sensitive materials as grass, straw, herbal raw material, vegetables and other materials, or mixtures of different plant materials, as well as for processing agricultural waste, in particular poultry droppings and horse or cow manure, into safe organic materials such as, for example, fertilizers. A vortex chamber contains a rotor for comminuting material and is designed to be volume-adjustable, wherein the lateral wall is configured in the shape of a right circular cylinder and the outer surface of the lateral wall and/or the lower wall of the vortex chamber are provided with additional openings for the removal of processed material. The invention is intended for obtaining several end products with different consumer properties (fineness, wetness, density, etc.) from a material, wherein said products can be obtained simultaneously.

## Description

The invention relates to the field of material processing, in particular to a method for processing heat-sensitive materials in a vortex chamber and can be used for drying, comminuting, heat treatment and simultaneous fractionation of heat-sensitive materials such as grass, hay, medicinal plant raw materials, vegetables and other materials or mixtures of various plant materials. The invention can also be used to process agricultural waste, in particular bird droppings, horse or cow manure, into safe organic materials, such as fertilizers.

It is known that modern poultry farms, in addition to the production of the main products in the form of poultry meat and eggs, are a source of a huge amount of toxic waste entering the natural environment, the main toxic waste of which is bird droppings, which is classified as hazardous organic products and is subject to mandatory disposal. Stale litter emits toxic gases - hydrogen sulphide, ammonia, methane; contains nitrates, antibiotics, pesticides dangerous to humans, as well as helminth eggs, E. coli, salmonella, spores of harmful plants. In addition, such litter is a source of fetid odours, which attract flocks of flies. With long-term storage of litter on unpaved areas, soil, ground and surface waters become contaminated.

For a fundamental solution to aforementioned problems of poultry farms, a technology for the constant processing of fresh bird droppings is needed, excluding its accumulation in the fields. One of such promising methods of manure disposal is its thermal processing into various safe materials: organic fertilizers; powdered or pelletized energy carriers.

However, this technology for the thermal processing of fresh bird droppings into safe organic products must meet a number of stringent requirements.

First, fresh native (without litter) manure with a moisture content of about 75% should be processed as soon as possible after it is removed from the poultry house, since its storage without processing creates serious environmental problems.

Secondly, this technology should not create environmental problems for the environment and for the personnel, both directly in the process of its implementation, and in the future, when using the products obtained from thermally processed material, which should not only be safe by themselves, but also to be safe for storing, and also not create a danger to personnel during their further use.

Thirdly, this technology, when implemented, should not require significant material and human costs, but on the contrary, at minimal cost, it should provide the manufacturer with a large consumer market for a new, environmentally friendly product.

Fourthly, the technology for processing fresh bird droppings should provide for the production of a whole line of products with different consumer qualities, for which it is enough to slightly change the technological modes of processing the material.

Fifthly, the technology for processing fresh bird droppings should provide for its implementation in the immediate vicinity of the poultry house, so as not to create additional costs for the transportation of the processed material with its possible partial loss, which pollutes the surrounding area, but also to use waste products for the poultry house, in particular waste drying gas, which can heat the poultry house during the cold season.

There is a known method for processing poultry waste by drying poultry manure in a gaseous heat carrier, while in order to destroy pathogens and reduce the exposure of drying, the manure is preliminarily dehydrated by pressing and crushed before being treated with a gaseous heat carrier to obtain crumbs of the same granulometric composition, and the heat carrier after interaction with the manure is subjected to deodorization (see SU 535446, classes F26B 3/02, F26B 5/14, year 1977).

The main disadvantages of the known method are its technological complexity in implementation and low environmental safety. This is due to the fact that the implementation of the known method requires not only a large number of different types of mechanized equipment (loading hopper, conveyor, magnetic separator, squeezing press, comminuter, dryer drum, cyclone, crusher, distribution auger and deodorizer), but also a large amount of consumable resources (water, electricity, spare parts for mechanisms, lubricants, adsorbent for deodorizer), and most importantly, a significant number of service personnel. The latter is explained by the presence of a large number of mechanized devices that require the constant presence of a significant number of service personnel (operators and technicians). It is known that the processed material (bird droppings) is a rather aggressive material in relation to the metal parts of products. Consequently, all equipment used is subject to constant corrosion and needs for daily flushing operations, constant anti-corrosion treatment and lubrication of moving parts, and most importantly, weekly routine maintenance. The result of daily flushing procedures is a large amount of water used, which, in turn, becomes contaminated with litter residues and becomes additional toxic waste, which means that it needs additional cleaning procedures. At the same time, the heat carrier, which dries the crushed droppings of manure in the dryer drum, also needs to be cleaned, for which, at the exit from the cyclone, it is passed through the deodorizer with the adsorbent to get rid of harmful gases and vapours. The adsorbent, in turn, must also be disposed periodically.

Closest to the claimed technical solution is, taken as a prototype, a method for processing poultry waste in a vortex chamber, including vertical supply of moistened waste into a horizontal vortex chamber, the end walls of which are made in the form of bodies of revolution, their mechanical comminuting on a rotating horizontal rotor in the centre of the vortex chamber and ejection into the working space of the chamber by vortex flows of hot air entering the chamber through the inlet tangential horizontal channel, while the hot air first dries the material and then removes it from the chamber in the form of a gas suspension through a gas exhaust system (see RU 2397416, classes F26B 17/10, F26B 3/12, year 2010). The known method, due to the simplicity of its implementation, the compact design of the vortex chamber and the possibility of its continuous operation, allows processing poultry waste directly at the place of their receipt, while the advantages of waste processing in the vortex chamber include:
- high reliability of the vortex chamber operation is ensured by the absence of mechanisms inside it with rubbing elements (conveyors, gear mechanisms, etc.) involved in the manure processing process, wherein the only available mechanical part (a rotating rotor) is installed on the motor axis, which itself located outside the chamber and in the processes of heat exchange inside the vortex chamber is not subjected to temperature effects;
- the vortex chamber allows to work in continuous mode for a long time, because inside it there are no sieves, gratings and other cloggable elements that require periodic cleaning or routine maintenance;
- inside the vortex chamber is performed simultaneously the entire cycle of manure processing into the finished product - a fine powder, which is removed from the vortex chamber in the form of a gas suspension;
- to implement the processing method in a vortex chamber, it is sufficient to have only one source of energy - an electrical network, with the help of which it is possible to obtain hot drying gas using electric heaters, as well as set the rotor on the motor shaft in motion and supply liquid waste to the chamber by electric pumps.

The disadvantages of the known method of processing poultry waste include the fact that, firstly, it allows obtaining only a fine (powdered) dry mass, intended mainly for combustion in heat generating devices.

Secondly, the known method does not allow during the processing of the material to produce its fractional separation inside the chamber in order to separate smaller, lighter and "volatile" fractions of the material from larger and heavier ones, which can be used, for example, as a basis for organic fertilizer with prolonged actions. Such fertilizers are usually applied under perennial plants (trees or shrubs) once every few years.

Thirdly, the known method does not allow changing the operation parameters of the vortex chamber during the material processing in order to adapt to the moisture of the incoming source material. Therefore, it is necessary to adjust the feed of the source material according to its moisture content.

The technical result of the proposed solution is to preserve the main advantages of processing wet material in a vortex chamber while eliminating these disadvantages, namely, bringing the technology for processing wet material in a vortex chamber to the stage of obtaining from it several finished products at once, and products with different consumer qualities (size, moisture, density, etc.), and not only in the form of a dusty gas suspension, and wherein these products can be obtained simultaneously.

The specified technical result is a method for processing heat-sensitive materials in a vortex chamber, comprising a vertical supply of a wet material into the vortex chamber, the walls of which are made in the form of a body of revolution with a vertical axis coinciding with the axis of rotation of a rotor, which mechanically comminute the incoming material and entrains it in a vortex flow of a drying gas entering the chamber through the inlet tangential channel, wherein the vortex flow first dries the material, and then removes it from the chamber in the form of a gas suspension through the gas exhaust system, is achieved by the fact that the vortex chamber is configured to change its volume, and a upper end wall and a lower end wall of the chamber are made in the form of bodies of revolution, and a side wall connecting them is in the form of a side surface of a straight circular cylinder, while additional holes can be made on the outer surface of the side wall and/or on the lower end wall of the vortex chamber for extracting the processed material with different properties.

The inventive method having the vortex chamber of variable volume, makes it possible to obtain, unlike the prototype, recycled material with different consumer qualities (size, moisture, density, etc.), and the specified processed material can be obtained simultaneously using additional holes for extracting processed material on the side wall and bottom end wall of the chamber.

By changing the positions of the upper end wall and lower end wall of the vortex chamber, it is possible to change both the volume of the vortex chamber and the process of interaction of the vortex flow of the drying gas with the processed material entering the chamber, which after being crushed by a rotor, is thrown onto the side wall and distributed along it in the form of a cylindrical layer of particles interacting with the vortex circular flow of the drying gas.

As a result of this interaction, the particles of the processed material are subjected to stratification, where smaller and dryer particles located in the upper part of the cylindrical layer, and larger and heavier particles located in its lower part.

The advantages of the proposed method for processing wet material include the following features.

Firstly, it allows quick adjustment of the processing technology to a material to be processed, where this material is inhomogeneous in moisture content and component structure, into a material of the required moisture content, density and fineness by changing the working volume of the vortex chamber, thereby creating conditions in the vortex chamber for the segregation of the processed material to the height of the cylindrical layer of particles near the side wall of the vortex chamber.

Secondly, the proposed method makes it possible to regulate (by changing the volume of the vortex chamber) the heat treatment mode of heat-sensitive materials over time, changing this mode from the thermal shock mode (short interaction of the processed material with the drying gas, close to the material pasteurization mode), achieved with the small volume of the vortex chamber, to the mode of gradual heating, long exposure and subsequent unloading with the required properties not only in terms of moisture, but also density and fineness, achieved with the large volume of the vortex chamber.

Thirdly, the proposed method has great technological advantages, due to the possibility of adjusting the position of the upper end wall and lower end wall of the vortex chamber relative to the plane of the inlet tangential channel for supplying drying gas, which makes it possible to implement various methods for processing heat-sensitive materials in the vortex chamber by controlling the temperature distribution inside the cylindrical layer of the dispersed processed material located in the vortex flow of the drying gas.

Fourthly, in the proposed method, using various additional holes, it becomes possible to simultaneously extract processed material separately from each other or in combination from the vortex chamber with various consumer qualities (size, moisture, density, etc.).

Thus, the claimed method of processing heat-sensitive materials allows, due to the possibility of changing the volume of the vortex chamber, to significantly rebuild the technological processes of interaction of the source material (inhomogeneous in moisture content and component structure) with the circular vortex flow of the drying gas and, thereby, effectively affecting the rotating cylindrical dispersed layer of crushed material that occurs near the side cylindrical wall and forms the processed material into zones of the processed material with different moisture content, density and dispersion, i.e. it becomes possible to classify the processed material directly during its processing in the vortex chamber, and the specified processed material with different consumer qualities (size, moisture, density, etc.) can be simultaneously removed through additional holes into different sealed containers. Therefore, the proposed method not only significantly increases the productivity of wet material processing, but also eliminates the use of additional equipment for the subsequent separation of the processed material, which has no prior-art among the known methods for processing heat-sensitive materials in a vortex chamber, and therefore meets the criterion of "inventive step".

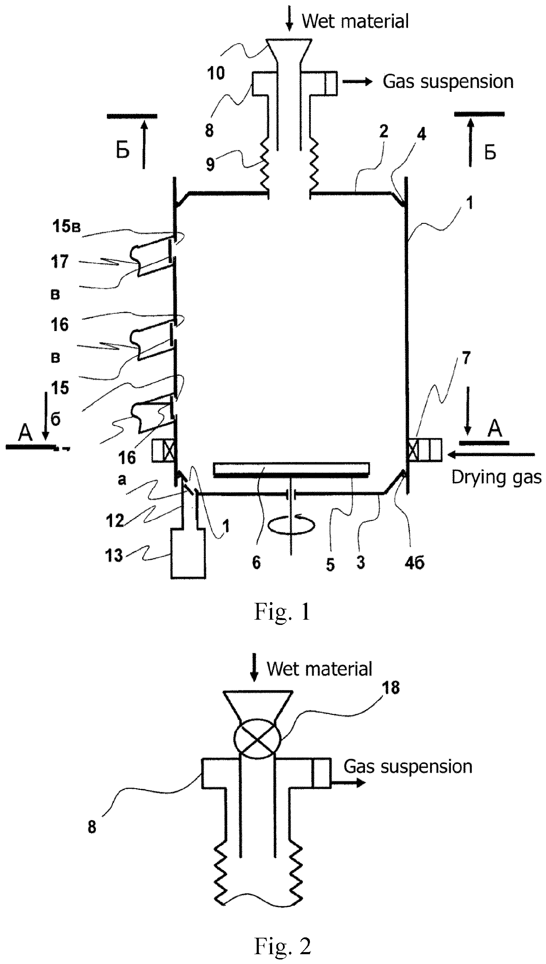

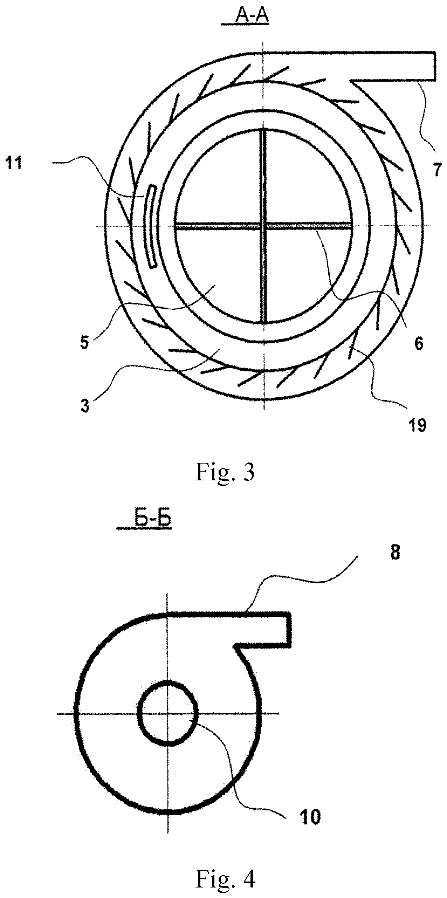

The essence of the proposed technical solution is illustrated by the figures shown in Fig. 1-4. Fig. 1 shows a drawing of a vertical cross section of the vortex chamber for implementing the proposed method, where: 1 - a side wall of the vortex chamber, having the shape of a side surface of a straight circular cylinder; an upper end wall 2 and a lower end wall 3 of the vortex chamber, which are made in the form of bodies of revolution and are installed with the possibility of moving along the axis of the vortex chamber to change the volume of the vortex chamber while maintaining its tightness due to sealing rings 4a and 4 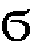 ; 5 - a rotating rotor with radial blades 6 for mechanical comminuting of wet material entering the vortex chamber; 7 - an inlet tangential channel (Fig. 2 shows its cross section A-A), through which a drying gas flow enters the vortex chamber; 8 - a gas exhaust system for removing gas suspension, cooling the drying gas and steam; 9 - a corrugated coupling to maintain the tightness of the vortex chamber, when changing its volume; 10 - a vertical loading channel for supplying wet material to the vortex chamber; 11 - an additional hole on the lower wall of the chamber for extracting from the vortex chamber the most dense particles of the dried material and foreign particles such as stones, metal particles and other similar objects that accidentally got into the processed material; 12 - a gate valve closing the material outlet from the additional hole 11; 13 - a channel for moving the most dense particles of dried material and foreign particles into a sealed container 14; 15a-15_{B} - additional holes on the side wall of the vortex chamber for extracting particles of dried material of various densities into the sealed containers; 16a-16_{B} - gate valves closing the additional outlets 15a-15_{B}; 17a-17_{B} - channels for moving particles of recycled material into the sealed containers (the containers themselves are not shown).

Fig. 2 shows a drawing explaining the device of the vertical loading channel with a typical sluice dispenser 18 (which is not shown in Fig. 1) for supplying wet material to the vortex chamber.

Fig. 3 shows a drawing of the section A-A, explaining the input tangential channel 7 with guide tangential plates 19.

Fig. 4 shows a drawing of the section B-B, explaining the gas exhaust system 8 connected to a typical cyclone (not shown in the Fig.) to separate the gas suspension from the drying gas.

Below the proposed method using the vortex chamber as shown in Fig 1 is described in more detail. Before a start of a work, the additional holes 11 and 15a-15_{B} arranged on the surface of the vortex chamber are preliminarily closed by the gate valves 12 and 16a-16_{B}. Further, with the help of a drive (in Fig 1, the drive of the rotor 5 is not shown) the rotor 5 is set into rotation with a rotation speed not exceeding 50% of the nominal, and the drying gas with a temperature of 150-200°C is started to be fed into the vortex chamber through the inlet tangential channel 7, which creates an intense vortex gas flow in the vortex chamber. This vortex gas flow begins to heat the walls of the vortex chamber. The cooled drying gas is discharged through the gas exhaust system 8. After the temperature of the walls of the vortex chamber is approximately equal to the temperature of the drying gas, a continuous flow (adjustable from 30% to a nominal) is fed into it through the vertical loading channel 10 with a continuous flow (adjustable from 30% to a nominal) of a wet material, which, for example, is bird droppings with a moisture content of about 75%, which falls on the rotating rotor 5 with radial blades 6 and are thrown by centrifugal forces onto the edge of the bottom wall 3 that is directed at an angle upwards, after which they are ricocheted upwards along the heated side wall 1, where they are captured by the circular vortex gas flow of the hot drying gas. Thus, in the vortex chamber, the interaction of the bird droppings, crushed by the means of the blades 6 of the rotor 5, with the circular cylindrical vortex gas flow of the drying gas is accomplished. As a result, a stable vortex dispersed layer is formed near the side wall, which is retained in the vortex chamber both by centrifugal forces arising due to the rotation of the rotor 5, and by exposing the bird dropping particles to the rotating vortex gas flow of the drying gas. Since the bird dropping flows through the loading channel 10 in small portions in a continuous mode, as the bird dropping is fed into the vortex chamber, the thickness of the vortex dispersed layer increases and at the same time its stratification (segregation) begins due to the presence in the layer of both sufficiently small and dry particles, and freshly arrived - moist, large and more dense. The vortex chamber enters the stationary mode of operation after the gas suspension containing the lightest dust-like particles of the processed material begins to flow through the gas exhaust system 8 together with the cooled drying gas and steam. By this time, the rotor speed and the wet material feed rate reaches 100% of their nominal value. After the vortex chamber enters the stationary mode of operation, it becomes possible to select processed material with different consumer qualities (size, moisture, density, etc.), for which one or more gate valves 12 and 16a - 16_{B} are slightly opened. As a result of this, the processed material, layered along the height of the cylindrical vortex shell and having different consumer qualities, can be extracted into the sealed container 12 and other sealed containers (not shown in Fig. 1), which are connected to the channels 17a-17_{B} using flexible hoses.

Next, various examples of the processing of wet materials carried out by the claimed method are described below.

### Example 1.

In the given example a mass agricultural waste such as native bird droppings with a moisture content of about 75% is used as a material to be processed. This waste is quite toxic, since it contains a large amount of various pathogenic microflora and its direct use as a fertilizer is not allowed. Its release to the fields is also unacceptable due to its high toxicity. At the same time, hundreds of tons of it is produced daily at poultry farms, which means that daily disposal is required. The proposed method is suitable for solving this problem.

Before a start of an operation, additional holes 11 and 15a-15_{B} arranged on the surface of the vortex chamber for extracting processed material are connected using elastic hoses (not shown in the Fig.) and slide gates 16a-16_{B} with sealed containers. At the same time, additional extraction channels are adjusted to the minimum productivity, for example, by slightly opening the slide gates by a small amount, which is determined experimentally.

The lower end wall 3 is raised as close as possible to the tangential gas supply channel 7, and the upper end wall 2 is raised as high as possible by the amount allowed by the design of the vortex chamber.

Next, the rotor 5 of the drying chamber is put into rotation with a rotation speed in the range of 40-50% from the nominal.

Then, the drying gas with a temperature of 150-200°C is fed into the vortex chamber through the inlet tangential gas supply channel 7, forming an intense vortex gas flow in the vortex chamber. After heating the chamber to a temperature close to the temperature of the drying gas, the wet native bird droppings with a moisture content of about 75% are fed into the vortex chamber through the vertical loading channel 10 for supplying the wet material. At the same time, the slide gate valves 16a-16_{B} begin to open synchronously to ensure that the supply of the bird droppings is synchronous with extraction from the vortex chamber. The synchronism of extraction is controlled, for example, by a weight method. To do this, the weight of the vortex chamber is continuously measured in order to maintain a constant weight of the processed material in it. Air ducts, pipes and other equipment connected to the chamber are connected to the chamber in such a way that they do not interfere with the weighing.

The speed of rotation of the rotor is adjusted to the nominal. After that, the weight of the unloaded finished product is sequentially controlled from various additional holes 15a-15_{B} on the side wall 1 of the vortex chamber. If the vortex chamber has switched to a stationary mode of operation, then the weight of the material unloaded from the chamber (including steam) is controlled to correspond to the weight of the loaded wet material through the loading channel 10. After that, the outflow rates of the processed material from various additional holes 15a-15_{B} is analysed. If the flow rate of the processed material through the additional hole 15_{B} is significantly lower (for example, 5 times or more) than through the hole 15 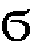 , then the upper end wall 2 is lowered below the hole 15_{B}, preliminary closing the sliding gate valve 16_{B}. Similarly, the flow rates of the processed material from the additional holes 15 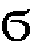 and 15a are monitored. If the velocities of the flow rates of material through the holes 15 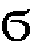 and 15a approximately coincide, then the downward movement of the upper end wall 2 is stopped. Next, samples of the material are taken from additional holes 15 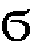 and 15a, as well as from the hole 11 on the lower end wall 3 and the moisture parameter of the material is analysed. If the moisture parameter suits, then further processing is carried out in the steady state. Suitable moisture parameters can be, for example, the following:
- from the lower additional hole 11 on the lower end wall 3, the bird droppings with a moisture content of about 60% is removed and sent for further processing, for example, for composting;
- from the medium height additional hole 15 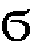 in the side wall 1, the bird droppings with the moisture content of 15-20% are taken, which are then mixed with dry bird droppings isolated from the gas suspension that passed through the gas exhaust system 8 (after its dry cleaning in a cyclone) and sent for pelletizing, the resulting pellets are used as fuel pellets, and the heat from their combustion is used, for example, to heat the composting room (in winter), for hot water supply, etc., and incineration ash is used as a mineral phosphorus-potassium fertilizer;
- from the lowest additional hole 15a on the side wall 1, the bird droppings with a moisture content of about 40% is taken, granulated and used as a granulated fertilizer.

Thus, the proposed method solves the problem of native bird droppings disposal with obtaining a wide range of useful products from it. An individual set of products is selected by the user at his own discretion.

### Example 2.

For example, a poultry farm needs to process manure into fine fuel for pelletizing. Other products are not needed. For this, a technological process similar to that described in the example 1 is used, but the position of the upper end wall 2 and lower end wall 3 is set as follows:
- the lower end wall 3 is moved about a half of a maximum possible downward movement from the inlet tangential gas supply channel 7;
- the upper end wall 2 is left in the uppermost position;
- the equipment is started in the same way as described in the example 1;
- after the equipment reaches the steady state operation, samples are taken from additional holes 15a-15_{B} (in fact, there can be much more holes than shown in Fig. 1) in the side wall 1 sequentially from top to bottom;
- when analysing the samples, the hole (for example, it turned out to be the hole 15a), from which the material with parameters that do not meet the required moisture characteristics (for example, more than 15% moisture content) is chosen. This opening 15a is closed;
- the hole 15 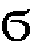 is left open. The remaining holes located above the open hole 15 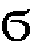 (in Fig. 1 this hole is the hole 15_{B}) are also closed. Thus, only one opening 15 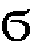 in the side wall 1 remains open;
- the upper end wall 2 is moved down and left approximately in the middle between the open hole 15 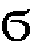 and the nearest hole 15_{B} above that is closed;
- the selection of material is carried out from the remaining open hole 15 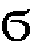 and from under the cyclone, in which the drying gas is cleaned from the gas suspension that leaves through the gas exhaust system 8;
- the selected material (from the hole 15 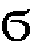 and from under the cyclone) is mixed and sent for pelletizing.

### Example 3.

For example, a poultry farm needs to process manure into fine fuel for combustion in dust burners. Other products are not needed.

The processing is carried out similar to the example 2, but after reaching the steady state operation, all additional holes 15 in the side wall 1 are closed and the material is taken only through the gas exhaust system 8 in the form of a gas suspension.

The difference from the example 2 is that the properties of the sampled material are additionally regulated by moving the upper end wall 2 synchronously with the lower end wall 3 by the same amount up or down within the possible stroke allowed by the dryer design.

When moving the upper end wall 2 and the lower end wall 3 synchronously up by the same amount, the lower end wall 3 moves closer to the inlet tangential gas supply channel 7. As a result, the processed material dries quickly near the rotor 5 and is less comminuted, since even relatively large particles, being sufficiently dry, quickly leave the comminuting zone near the rotor 5.

The reverse process is observed when moving the upper end wall 2 and lower end wall 3 synchronously down by the same amount. When moving the upper end wall 2 and lower end wall 3 synchronously down by the same amount, the lower end wall 3 moves further from the inlet tangential gas supply channel 7. As a result, the processed material dries more slowly in the area of the rotor 5. For this reason, the processed material being heavier due to the presence of a large amount of water in it, stays longer in the region of the rotor 5 and is more comminuted by its blades 6. As a result, the particles become smaller and smaller. Having reached a sufficiently large degree of comminuting, the particles are carried away by the drying gas flow in the form of the gas suspension through the gas exhaust system 8, even being relatively wetter.

If the moisture of the entrained particles in this case is unacceptably high, then it is possible to additionally dry them by moving the upper end wall 2 even further upwards, regardless of the lower end wall 3. In this case, dryer particles will be carried out with the flow of the drying gas through the gas exhaust system 8 due to the already described above the phenomenon of segregation of particles inside the vortex chamber. Thus, in this case, by shifting the upper end wall 2 and the lower end wall 3 synchronously in one direction, but by different values, it is possible to achieve both the required size of the processed particles and their required moisture content.

### Example 4.

For example, an enterprise producing combined feed, including for poultry farming, needs to process vegetable raw materials, for example, freshly cut grass, into vitamin flour and use it as one of the components in a combined feed. The main task in this case is to quickly comminute the raw material and dry it to the required moisture content with maximum preservation of useful substances, including vitamins, in the resulting product. The aim is reached by organizing such a technological process, in which not only the rapid comminuting of raw materials takes place, but also its rapid heat treatment. This process can be compared to the pasteurization process that takes place in dairy and melange industries. The essence of such a heat treatment process, which can also be called a "thermal pulse", is to quickly heat the material to the required temperature, and then quickly remove it from the heating zone, followed by rapid cooling. The main feature of this process is that the upper end wall 2 and the lower end wall 3 move as close as possible to each other, providing a minimum volume of the vortex chamber (it is obvious that in this case the upper end wall 2 remains above the inlet tangential gas supply channel 7, and the lower end wall 3 remains below this channel). At the same time, the minimum volume of the vortex chamber ensures the minimum contact time of the hot drying gas with the material being processed.

This process can be described in more detail as follows:
- the upper end wall 2 is brought as close as possible to the inlet tangential gas supply channel 7, but leaving between the inlet tangential gas supply channel 7 and the upper end wall 2 one additional hole 15a in the side wall 1 (all additional holes 15 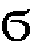 and 15 _{B} positioned above are closed);
- the lower end wall 3 is raised as close as possible (as far as the equipment design allows) to the inlet tangential gas supply channel 7;
- the equipment is put into operation and brought to a steady state of operation, as described in the example 1;
- samples are taken (as described in the example 1) from the hole 15a in the side wall 1, empirically selecting the temperature of the drying gas and the speed of the material passing through the vortex chamber so that they correspond to the technological schedule for processing raw materials;
- by moving the upper end wall 2 and the lower end wall 3 as described in the example 3, the required parameters (in size and moisture content) of the processed material are achieved;
- if, according to the analyses results of the processed material, a lower moisture content is required, i.e. the processed material should be drier, then the upper end wall 2 is raised even higher (regardless of the position of the lower end wall 3) and the selection of material is started by opening the additional hole 15 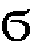 closest to the upper end wall 2 in the side wall 1, while closing the hole 15a;
- the processed raw material extracted from the additional hole 15 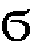 in the side wall 1, as well as the raw material carried away in the form of a gas suspension, are sent for rapid cooling. Example 5.

An enterprise producing combined feed, including for poultry farming, needs to process vegetable raw materials (medicinal herbs harvested by digging and, therefore, having a root system partially contaminated with soil) into medicinal additives for poultry feed.

The processing of such raw materials should be carried out similarly to the example 4, but, at the same time, the following features of this type of raw material must be taken into account:
- medicinal raw materials are quite expensive and their losses during processing should be minimized;
- the sand remaining on the root system is undesirable for poultry feed, which means that it should be removed as much as possible during processing.

Considering aforementioned requirements, the technological process of processing can be modified as follows (compared to the example 4):
- the lower end wall 3 is installed below the inlet tangential gas supply channel 7 (the exact location of the wall 3 is selected experimentally), wherein the lower end wall 3 is moved independently of the upper end wall 2;
- periodically open (the frequency of opening is selected experimentally) the gate valve 12, which closes the exit of the material from the additional hole 11 in the lower end wall 3, removing from it the accumulated sand from the root system.

To test the proposed method for processing wet heat-sensitive materials, a model of the vortex chamber was created, the vertical section of which is shown in Fig. 1. The chamber had the following specifications:
- the minimum volume of the vortex chamber - 0.3 cubic meters;
- maximum volume of the vortex chamber - 0.86 cubic meters;
- diameter of the vortex chamber - 0.8 m;
- the total height of the chamber is 1.8 m;
- weight of the material permanently located in the chamber - 5-12 kg;
- drying gas temperature - 120-400 °C;
- nominal speed of rotation of the rotor - 1500 rpm.

On the specified model of the vortex chamber, the wide possibilities of the proposed method (which are not limited to examples 1-5) for the processing of heat-sensitive materials, including the processing of native bird droppings and herbal medicinal raw materials, were experimentally confirmed.

## Claims

1. A method for processing heat-sensitive materials in a vortex chamber, comprising a vertical supply of wet material into the vortex chamber, the walls of which are made in the form of a body of revolution with a vertical axis coinciding with the axis of rotation of a rotor, which mechanically comminute the incoming material and entrains it in a vortex flow of drying gas entering into the chamber through the inlet tangential channel, wherein the vortex flow first dries the material, and then removes it from the chamber in the form of a gas suspension through a gas exhaust system, **characterized in that** the vortex chamber is configured to change its volume, wherein upper end and lower end walls of the chamber are made in the form of bodies of revolution, and a side wall connecting said ends is in the form of a side surface of a straight circular cylinder, wherein additional holes are made on the outer surface of the side wall and/or on the lower end wall of the chamber for extracting the processed material.

2. The method according to claim 1, **characterized in that** the change in the volume of the vortex chamber is performed by raising or lowering only the upper end wall or only the lower end wall of the vortex chamber.

3. The method according to claim 1, **characterized in that** the change in the volume of the vortex chamber is performed by simultaneously raising the upper end wall and lowering the lower end wall of the vortex chamber.

4. The method according to claim 1, **characterized in that** the change in the volume of the vortex chamber is performed by simultaneously lowering the upper end wall and raising the lower end wall of the vortex chamber.

5. The method according to claim 1, **characterized in that** the movement of the upper end wall and the lower end wall of the vortex chamber is performed in one direction while maintaining the constant volume of the vortex chamber.

6. The method according to claim 1, **characterized in that** the movement of the upper end wall and the lower end walls of the vortex chamber is performed in one direction while changing the volume of the vortex chamber.

7. The method according to claim 1, **characterized in that** by means of additional holes located at different heights of the side wall of the vortex chamber, different fractions of the processed material are extractable from it.

8. The method according to claim 1, **characterized in that** by means of additional holes located on the lower end wall of the chamber, the heaviest particles of processed material and foreign inclusions, for example, stones or metal particles, can be removed from it.
